# EUROPÄISCHE PATENTSCHRIFT

(11) **EP 2 960 629 B1**
(45) Veröffentlichungstag und Bekanntmachung des Hinweises auf die Patenterteilung: **18.09.2024**
(21) Anmeldenummer: 15001138.5
(22) Anmeldetag: 17.04.2015
(51) Int. Cl.: G01C 21/34

(54) **VERFAHREN ZUR UNTERSTÜTZUNG EINES FAHRERS EINES FAHRZEUGES, INSBESONDERE EINES NUTZFAHRZEUGES**
METHOD FOR SUPPORTING A DRIVER OF A VEHICLE, IN PARTICULAR A COMMERCIAL VEHICLE
PROCÉDÉ D'ASSISTANCE À UN CONDUCTEUR D'UN VÉHICULE AUTOMOBILE, EN PARTICULIER UN VÉHICULE UTILITAIRE

(30) Priorität: 26.06.2014 DE 102014009282
(43) Veröffentlichungstag der Anmeldung: 30.12.2015
(73) Patentinhaber: MAN Truck & Bus SE, 80995 München (DE)
(72) Erfinder: Resch, Franz Georg, 86938 Schondorf a.A. (DE); Reif, Bernhard, 86807 Buchloe (DE)
(74) Vertreter: Liebl, Thomas

(56) Entgegenhaltungen:
- EP-A1- 1 832 843
- EP-A1- 2 495 124
- EP-A1- 2 787 325
- WO-A2-03/093765
- DE-A1- 102009 011 252
- DE-A1- 102012 008 227
- DE-A1- 102012 024 621
- US-A1- 2007 050 191

## Beschreibung

Die Erfindung betrifft eine Navigations-Einrichtung als mobiles Gerät für ein Nutzfahrzeug nach Anspruch 1 und ein Verfahren zur Unterstützung eines Fahrers eines Nutzfahrzeuges nach Anspruch 3.

Moderne Fahrzeuge, insbesondere Nutzfahrzeuge, weisen regelmäßig eine Navigations-Einrichtung auf, mittels der eine bezüglich wenigstens eines Optimierungsparameters optimierte Fahrroute ermittelt und einem Fahrer des Fahrzeuges angezeigt werden kann. Der wenigstens eine Optimierunsparameter kann dabei beispielsweise eine möglichst kurze Fahrzeit oder eine möglichst kurze Fahrstrecke zum Erreichen eines Fahrziels sein. Die Navigations-Einrichtung kann beispielsweise stationär und ortsfest an dem Fahrzeug festgelegt sein. Ebenso ist es aber auch bekannt, dass die Navigations-Einrichtung als mobiles Gerät ausgebildet ist, das mit einer geeigneten Haltevorrichtung lösbar an dem Fahrzeug festgelegt werden kann. Dieses mobile Gerät kann beispielsweise ein speziell für die Fahrzeugnavigation entwickeltes Navigationsgerät sein. Alternativ kann das mobile Gerät auch ein Mobiltelefon, insbesondere ein Smartphone, ein mobiler Computer oder aber auch ein sogenannter PDA (Personal Digital Assistent) sein, das bzw. der mit entsprechender Hardware und Software zur Fahrzeugnavigation ausgestattet ist.

In vielen Ländern gibt es gesetzlich vorgeschriebene Fahrverbote, die für bestimmte Fahrzeuge, beispielsweise Lastkraftwagen, an bestimmten Tagen, beispielsweise an Feiertagen oder in den Schulferien, gelten. Diese Fahrverbote sind beispielsweise in der deutschen Verordnung zur Erleichterung des Ferienreiseverkehrs auf der Straße (FerReiseV) offenbart. Sofern die Fahrverbote nicht eingehalten werden, drohen Strafen und Bußgelder.

US 2013/218453 A1 offenbart eine Navigations-Einrichtung in Form eines mobilen Geräts, das bei der Berechnung der Route datums- und fahrzeuggewichtabhängige Fahrverbote auf definierten Fahrstreckenabschnitten berücksichtigt. In der DE 10 2012 024 621 A1 ist ein Verfahren zum Betreiben eines Navigationssystems gezeigt. Die EP 2 787 325 A1 beschreibt eine Anordnung zur Warnung vor und/oder zur Berücksichtigung von nutzfahrzeugrelevanten Fahreinschränkungen. In der DE 10 2009 011 252 A1 ist eine Fahrzeugnavigationsvorrichtung gezeigt. Aus der DE 10 2012 008 227 A1 ist ein Verfahren und ein Fahrerassistenzsystem zur Ermittlung und graphischer Darstellung einer energieeffizienzoptimierten Ausrollstrecke eines Fahrzeugs bekannt. Die EP 2 495 124 A1 beschreibt ein Kraftfahrzeug mit einer Erfassungseinrichtung zur Erfassung der aktuell befahrenen Strecke. In der EP 1 832 843 A1 ist ein Verfahren zur Bestimmung einer Fahrroute gezeigt. Die US 2007/050191 A1 offenbart mobile Systeme und Verfahren zur Unterstützung natürlichsprachlicher Mensch-Maschine-Interaktionen. Aus der WO 03/093765 A1 ist ein dynamisches Navigationssystem bekannt.

Aufgabe der Erfindung ist es, eine Navigations-Einrichtung und ein Verfahren zur Unterstützung eines Fahrers eines Nutzfahrzeuges bereitzustellen, bei denen die Unterstützung für den Fahrer erweitert und/oder verbessert ist.

Diese Aufgabe wird durch die Merkmale der unabhängigen Ansprüche gelöst. Bevorzugte Weiterbildungen sind in den Unteransprüchen offenbart.

Die Erfindung betrifft eine Navigations-Einrichtung als mobiles Gerät für ein Nutzfahrzeug, wobei die Navigations-Einrichtung eine Steuereinrichtung und eine Anzeigeeinrichtung aufweist, und wobei mittels der Steuereinrichtung eine bezüglich wenigstens eines Optimierungsparameters optimierte Fahrroute ermittelbar ist und mittels der Anzeigeeinrichtung dem Fahrer anzeigbar ist. Erfindungsgemäß ist die Steuereinrichtung datenübertragend mit einer Informations-Einrichtung der Navigations-Einrichtung verbunden, in der Informationen zu datums- und fahrzeuggewichtsabhängigen Fahrverboten auf definierten Fahrstreckenabschnitten gespeichert, bevorzugt hinterlegt, sind. Erfindungsgemäß ist die Navigations-Einrichtung derart ausgebildet, dass mittels der Anzeigeeinrichtung der Navigations-Einrichtung Hinweise zu relevanten datums- und fahrzeuggewichtabhängigen Fahrverboten auf der ermittelten Fahrroute anzeigbar sind.

Auf diese Weise ist die Unterstützung für den Fahrer des Fahrzeuges deutlich erweitert bzw. verbessert, da, sofern bei der Ermittlung der optimierten Fahrroute die datums- und fahrzeuggewichtabhängigen Fahrverbote auf den definierten Fahrstreckenabschnitten berücksichtigt werden, der Fahrer mittels der Navigations-Einrichtung an Fahrstreckenabschnitten, an denen er datums- und fahrzeuggewichtbedingt nicht fahren darf, automatisch mittels der Navigations-Einrichtung vorbeigeleitet werden kann. Sofern dem Fahrer Hinweise zu relevanten datums- und fahrzeuggewichtabhängigen Fahrverboten auf der ermittelten Fahrroute angezeigt werden, ist die Unterstützung für den Fahrer ebenfalls deutlich erweitert bzw. verbessert, da der Fahrer nun automatisch mittels der Navigations-Einrichtung auf derartige, den Fahrer betreffende Fahrverbote auf der ermittelten Fahrroute hingewiesen wird. So kann der Fahrer beispielsweise Fahrstreckenabschnitte, an denen er datums- und fahrzeuggewichtbedingt nicht fahren darf, deutlich besser umfahren bzw. eine derartige Umfahrung deutlich besser planen.

Erfindungsgemäß wird, sofern dem Fahrer Hinweise zu Fahrverboten auf der ermittelten Fahrroute angezeigt werden, dem Fahrer auch wenigstens eine alternative Fahrroute angezeigt, bei der die datums- und fahrzeuggewichtabhängigen Fahrverbote berücksichtigt sind, wobei eine durch einen Fahrer betätigbare Eingabe-Einrichtung vorgesehen ist, durch deren Betätigung eine der angezeigten Fahrrouten ausgewählt werden kann. Dadurch ist das erfindungsgemäße Verfahren besonders flexibel, da der Fahrer bedarfsweise eine Fahrroute, bei der die datums- und fahrzeuggewichtabhängigen Fahrverbote nicht berücksichtigt sind, oder eine Fahrroute, bei der die datums- und fahrzeuggewichtabhängigen Fahrverbote berücksichtigt sind, auswählen kann.

Erfindungsgemäß sind das aktuelle Datum und das Fahrzeuggewicht und die Informationen zu den datums- und fahrzeuggewichtabhängigen Fahrverboten in der Informations-Einrichtung der Navigations-Einrichtung gespeichert, um das erfindungsgemäße Verfahren auf einfache Weise ausführen zu können. In einer nicht von der Erfindung umfassten Ausbildung kann das aktuelle Datum in einer zentralen Bordelektronik des Fahrzeuges und/oder in einem digitalen Tachographen des Fahrzeuges gespeichert und/oder hinterlegt sein, während der wenigstens eine relevante Fahrzeugparameter und/oder die Informationen zu den datums- und fahrzeugabhängigen Fahrverboten in einer zusätzlichen, räumlich von der Informations-Einrichtung für das Datum getrennten Informations-Einrichtung gespeichert und/oder hinterlegt sind. Erfindungsgemäß sind jedoch das aktuelle Datum, das Fahrzeuggewicht und die Informationen zu den datums- und fahrzeuggewichtabhängigen Fahrverboten in der einzigen, eine Baueinheit ausbildenden, Informations-Einrichtung der Navigations-Einrichtung gespeichert. Auf diese Weise ist die Navigations-Einrichtung besonders kompakt ausgebildet.

Zur Lösung der bereits erwähnten Aufgabenstellung wird ferner ein Nutzfahrzeug mit der als mobiles Gerät ausgebildeten Navigations-Einrichtung vorgeschlagen

Die sich durch das Nutzfahrzeug und durch das Verfahren zur Unterstützung eines Fahrers eines Nutzfahrzeugs sowie die darauf rückbezogenen Unteransprüche ergebenden Vorteile sind identisch mit den bereits gewürdigten Vorteilen der erfindungsgemäßen Navigations-Einrichtung, so dass diese an dieser Stelle nicht wiederholt werden.

Erfindungsgemäß werden mittels der Anzeigeeinrichtung Hinweise zu relevanten datums- und fahrzeuggewichtabhängigen Fahrverboten auf der ohne Berücksichtigung der datums- und fahrzeuggewichtabhängigen Fahrverbote ermittelten Fahrroute und zusätzlich auch wenigstens eine alternative Fahrroute angezeigt, bei der die datums- und fahrzeuggewichtabhängigen Fahrverbote berücksichtigt sind. Mittels einer durch den Fahrer betätigbaren Eingabe-Einrichtung kann dann eine der angezeigten Fahrrouten ausgewählt werden. Erfindungsgemäß sind auch das aktuelle Datum und das Fahrzeuggewicht in der Informations-Einrichtung gespeichert, wobei vorgesehen ist, dass die Informationen zu den datums- und fahrzeuggewichtabhängigen Fahrverboten, das aktuelle Datum und das Fahrzeuggewicht in der einzigen, eine Baueinheit ausbildenden, Informations-Einrichtung der Navigations-Einrichtung gespeichert sind.

In einer nicht von der Erfindung umfassten Ausbildung ist die Navigations-Einrichtung stationär und/oder ortsfest an dem Fahrzeug festgelegt oder lösbar festlegbar, um eine verkehrssichere Navigation sicherzustellen. Erfindungsgemäß ist die Navigations-Einrichtung als mobiles Gerät, beispielsweise als Mobiltelefon, als mobiler Computer oder als PDA, ausgebildet. Die Software bzw. das Computerprogrammprodukt für die Navigation mit dem mobilen Gerät kann dabei beispielsweise mittels sogenannter Apps bereitgestellt werden. Es wird die Navigations-Einrichtung als mobiles Gerät für ein Nutzfahrzeug und/oder ein Nutzfahrzeug mit einer als mobiles Gerät ausgebildeten Navigations-Einrichtung und/oder ein Verfahren zur Unterstützung eins Fahrers eines Nutzfahrzeugs beansprucht. Die sich hieraus ergebenden Vorteile sind identisch mit den bereits gewürdigten Vorteilen, so dass diese an dieser Stelle nicht wiederholt werden.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Perspektivdarstellung das Innere eines Fahrzeugs mit einer nicht von der Erfindung umfassten Navigations-Einrichtung;
- Fig. 2: eine Darstellung, anhand der Aufbau und die Funktionsweise der nicht von der Erfindung umfassten Navigations-Einrichtung erläutert wird;
- Fig. 3: in einer Darstellung gemäß Fig. 1 das Fahrzeug mit einer erfindungsgemäßen Navigations-Einrichtung als mobiles Gerät.

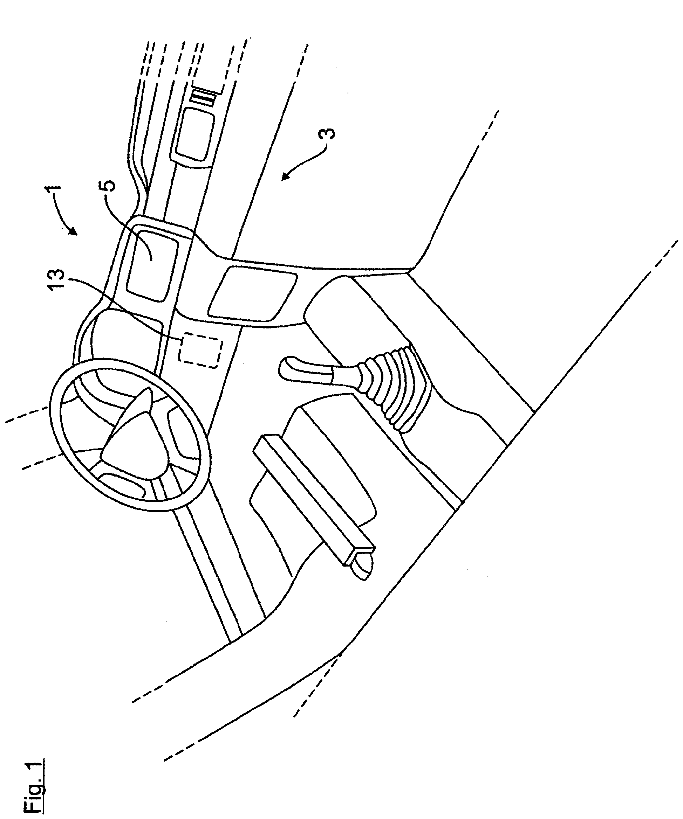

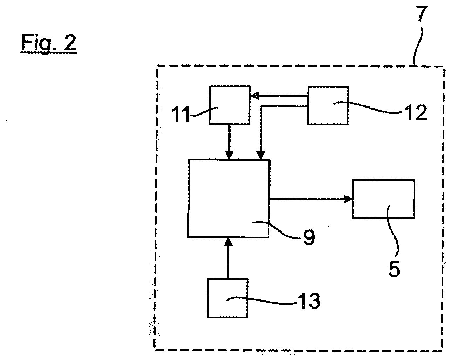

In Fig. 1 ist eine nicht von der Erfindung umfasste Navigations-Einrichtung gezeigt. Insbesondere ist in Fig. 1 schematisch und teilweise das Innere eines beispielsweise als Lastkraftwagen ausgebildeten Fahrzeuges 1 gezeigt. Das Fahrzeug 1 weist eine Instrumententafel 3 mit einem stationär und ortsfest an der Instrumententafel 3 festgelegten Sekundär-Bildschirm 5 auf. Mittels des Sekundär-Bildschirms 5 kann einem Fahrer des Fahrzeuges 1 hier beispielhaft ein Bedienmenü zur Bedienung unterschiedlicher Fahrzeugfunktionen, beispielsweise eines Infotainment-Systems des Fahrzeuges, angezeigt werden. Gleichzeitig dient der Sekundär-Bildschirm 5 hier aber auch als Anzeigeeinrichtung einer Navigations-Einrichtung 7 (Fig. 2) des Fahrzeuges 1, wodurch mittels des Sekundär-Bildschirms 5 auch eine mittels der Navigations-Einrichtung 7 ermittelte Fahrroute angezeigt werden kann.

In Fig. 2 sind wesentliche Komponente der nicht von der Erfindung umfassten Navigations-Einrichtung 7 gezeigt. Neben dem Sekundär-Bildschirm 5 als Anzeigeeinrichtung weist die Navigations-Einrichtung 7 auch eine signaltechnisch mit dem Sekundär-Bildschirm 5 verbundene Steuereinrichtung 9 auf. Mittels der Steuereinrichtung 9 kann eine bezüglich wenigstens eines Optimierungsparameters, beispielsweise eine möglichst geringe Fahrzeit oder eine möglichst geringe Fahrstrecke zum Erreichen eines Fahrziels, optimierte Fahrroute ermittelt werden.

Die Steuereinrichtung 9 ist datenübertragend mit einer Informations-Einrichtung 11 der Navigations-Einrichtung 7 verbunden, in der hier beispielhaft in verschiedenen Ländern gesetzlich vorgeschriebene datums- und fahrzeuggewichtabhängige Fahrverbote auf definierten Fahrstreckenabschnitten und das Fahrzeuggewicht hinterlegt bzw. gespeichert sind. Das Fahrzeuggewicht wird hier beispielhaft durch den Fahrer des Fahrzeuges 1 mittels einer signalübertragend mit der Informations-Einrichtung 11 verbundenen Eingabe-Einrichtung 12 eingegeben. Ebenso wäre es beispielsweise aber auch denkbar, dass ein fester Wert für das Fahrzeuggewicht, beispielsweise das zulässige Gesamtgewicht des Fahrzeuges 1, in der Informations-Einrichtung 11 hinterlegt bzw. gespeichert ist. Weiter ist die Steuereinrichtung 9 hier auch mit einer weiteren Informations-Einrichtung, hier beispielhaft ein in Fig. 1 mit gestrichelten Linien angedeuteter Tachograph 13 des Fahrzeuges 1, datenübertragend verbunden, in dem das aktuelle Datum gespeichert bzw. hinterlegt ist. Alternativ zu dem Tachograph 13 könnte das aktuelle Datum beispielsweise aber auch in der zentralen Bordelektronik des Fahrzeuges 1 hinterlegt bzw. gespeichert sein.

Mittels der Informationen zu den datums- und fahrzeuggewichtabhängigen Fahrverboten, dem Fahrzeuggewicht und zu dem aktuellen Datum kann mittels der Steuereinrichtung 9 die optimierte Fahrroute auch unter Berücksichtigung der datums- und fahrzeuggewichtabhängigen Fahrverboten ermittelt werden. Das heißt, dass der Fahrer des Fahrzeuges 1 von der Navigations-Einrichtung 7 dann an Fahrstreckenabschnitten, an denen der Fahrer datums- und fahrzeuggewichtbedingt nicht fahren darf, automatisch vorbeigeleitet wird. Alternativ und/oder zusätzlich können dem Fahrer des Fahrzeuges 1 mittels des Sekundär-Bildschirms 5 auch Hinweise zu relevanten datums- und fahrzeuggewichtabhängigen Fahrverboten auf der ohne Berücksichtigung der datums- und fahrzeuggewichtabhängigen Fahrverboten ermittelten Fahrroute angezeigt werden. Auf diese Weise wird der Fahrer des Fahrzeuges 1 automatisch auf relevante datums- und fahrzeuggewichtabhängige Fahrverbote hingewiesen. Dadurch kann der Fahrer beispielsweise die Umgehung der Fahrstreckenabschnitte, auf denen er datums- und fahrzeuggewichtsbedingt nicht fahren darf, deutlich besser einplanen.

Erfindungsgemäß sind stattdessen mittels der Anzeigeeinrichtung 5 der als mobiles Gerät 17 ausgebildeten Navigations-Einrichtung 7 sowohl die Hinweise zu den relevanten datums- und fahrzeuggewichtabhängigen Fahrverboten auf der ohne Berücksichtigung dieser Fahrverbote ermittelten Fahrroute als auch wenigstens eine alternative, die datums- und fahrzeuggewichtsabhängige Fahrverbote berücksichtigende Fahrroute anzeigbar. Der Fahrer des Fahrzeuges 1 kann dann mittels der von der Navigations-Einrichtung umfassten Eingabe-Einrichtung 12 eine der angezeigten Fahrrouten auswählen.

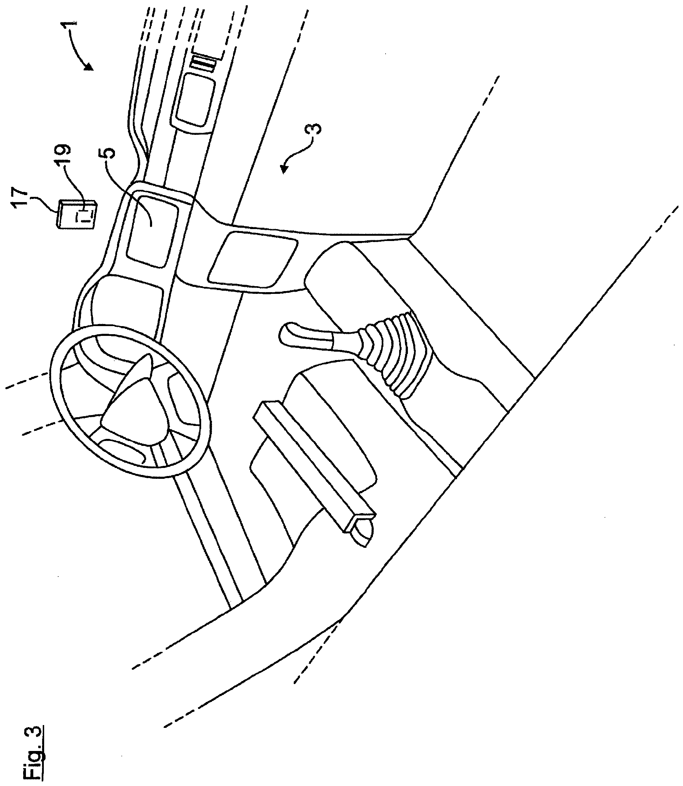

In Fig. 3 ist eine erfindungsgemäße Navigations-Einrichtung gezeigt. Die Navigations-Einrichtung ist hier, im Gegensatz zu der in Fig.1 gezeigten und nicht von der Erfindung umfassten Navigations-Einrichtung 7, nicht stationär und ortsfest an dem Fahrzeug 1 ausgebildet bzw. festgelegt, sondern als mobiles Gerät 17 ausgebildet, das mit einer geeigneten Halteeinrichtung lösbar an dem Fahrzeug 1 festgelegt werden kann. Das mobile Gerät 17 kann dabei beispielsweise ein mobiles Navigationsgerät, ein Mobiltelefon, ein mobiler Computer oder aber auch ein PDA sein. Zudem weist die Navigations-Einrichtung 7 hier auch keine zwei räumlich voneinander getrennt angeordnete Informations-Einrichtungen 11 und 13 auf, sondern lediglich eine einzige, als kompakte Baueinheit ausgebildete, in Fig. 3 mit gestrichelten Linien angedeutete Informations-Einrichtung 19 auf, in der sowohl die Informationen zu den datums- und fahrzeuggewichtabhängigen Fahrverboten als auch das Fahrzeuggewicht und das aktuelle Datum hinterlegt bzw. gespeichert sind.

### Bezugszeichenliste

- 1: Fahrzeug
- 3: Instrumententafel
- 5: Sekundär-Bildschirm
- 7: Navigations-Einrichtung
- 9: Steuereinrichtung
- 11: Informations-Einrichtung
- 12: Eingabe-Einrichtung
- 13: Tachograph
- 17: mobiles Gerät
- 19: Informations-Einrichtung

## Patentansprüche

1. Navigations-Einrichtung als mobiles Gerät für ein Nutzfahrzeug, wobei die Navigations-Einrichtung (17) eine Steuereinrichtung (9) und eine Anzeigeeinrichtung (5) aufweist, und wobei mittels der Steuereinrichtung (9) eine bezüglich wenigstens eines Optimierungsparameters optimierte Fahrroute ermittelbar ist, und wobei mittels der Anzeigeeinrichtung (5) einem Fahrer des Fahrzeuges (1) die ermittelte Fahrroute anzeigbar ist, wobei die Steuereinrichtung (9) datenübertragend mit einer Informations-Einrichtung (19) der Navigations-Einrichtung (17) verbunden ist, in der Informationen zu datums- und fahrzeuggewichtabhängigen Fahrverboten auf definierten Fahrstreckenabschnitten gespeichert sind, und
wobei die Navigations-Einrichtung (17) derart ausgebildet ist, dass mittels der Anzeigeeinrichtung (5) Hinweise zu relevanten datums- und fahrzeuggewichtabhängigen Fahrverboten auf der ermittelten Fahrroute anzeigbar sind, und
wobei mittels der Anzeigeeinrichtung (5) zusätzlich auch wenigstens eine alternative Fahrroute anzeigbar ist, bei der die datums- und fahrzeuggewichtabhängigen Fahrverbote berücksichtigt sind, und
wobei die Navigations-Einrichtung (17) eine durch den Fahrer betätigbare Eingabe-Einrichtung (12) aufweist, durch deren Betätigung eine der angezeigten Fahrrouten auswählbar ist, und
wobei auch das aktuelle Datum und das Fahrzeuggewicht in der Informations-Einrichtung (19) der Navigations-Einrichtung (17) gespeichert sind,
wobei vorgesehen ist, dass das aktuelle Datum, das Fahrzeuggewicht und die Informationen zu den datums- und fahrzeuggewichtabhängigen Fahrverboten in der einzigen, eine Baueinheit ausbildenden Informations-Einrichtung (19) der Navigations-Einrichtung (17) gespeichert sind.

2. Nutzfahrzeug mit einer Navigations-Einrichtung (17) nach Anspruch 1.

3. Verfahren zur Unterstützung eines Fahrers eines Nutzfahrzeuges, wobei eine als mobiles Gerät ausgebildete Navigations-Einrichtung (17) vorgesehen ist, wobei die Navigations-Einrichtung (17) eine Steuereinrichtung (9) und eine Anzeigeeinrichtung (5) aufweist, wobei mittels der Steuereinrichtung (9) eine bezüglich wenigstens eines Optimierungsparameters optimierte Fahrroute ermittelt wird, und wobei mittels der Anzeigeeinrichtung (5) einem Fahrer des Fahrzeuges (1) die ermittelte Fahrroute angezeigt wird, wobei die Steuereinrichtung (9) datenübertragend mit einer Informations-Einrichtung (19) der Navigations-Einrichtung (17) verbunden ist, in der Informationen zu datums- und fahrzeuggewichtabhängigen Fahrverboten auf definierten Fahrstreckenabschnitten gespeichert sind, und
wobei vorgesehen ist, dass dem Fahrer mittels der Anzeigeeinrichtung (5) Hinweise zu relevanten datums- und fahrzeuggewichtabhängigen Fahrverboten auf der ermittelten Fahrroute angezeigt werden, und
wobei, sofern dem Fahrer Hinweise zu Fahrverboten auf der ermittelten Fahrroute angezeigt werden, dem Fahrer auch wenigstens eine alternative Fahrroute angezeigt wird, bei der die datums- und fahrzeuggewichtabhängigen Fahrverbote berücksichtigt sind,
wobei eine durch den Fahrer betätigbare Eingabe-Einrichtung (12) der Navigations-Einrichtung (17) vorgesehen ist, durch deren Betätigung eine der angezeigten Fahrrouten ausgewählt werden kann, und
wobei das aktuelle Datum und das Fahrzeuggewicht und die Informationen zu den datums- und fahrzeuggewichtabhängigen Fahrverboten in der Informations-Einrichtung (19) der Navigations-Einrichtung (17) gespeichert sind,
wobei vorgesehen ist, dass das aktuelle Datum, das Fahrzeuggewicht und die Informationen zu den datums- und fahrzeugabhängigen Fahrverboten in der einzigen, eine Baueinheit ausbildenden Informations-Einrichtung (19) der Navigations-Einrichtung (17) gespeichert sind.

## Claims

1. Navigation device as a mobile unit for a commercial vehicle, wherein the navigation device (17) has a control device (9) and a display device (5), and wherein a driving route that is optimized with respect to at least one optimization parameter can be determined by means of the control device (9), and wherein the determined driving route can be displayed to a driver of the vehicle (1) by means of the display device (5), wherein the control device (9) has a data-transmitting connection to an information device (19) of the navigation device (17), in which information relating to date-dependent and vehicle-weight-dependent driving bans on defined route sections is stored, and
wherein the navigation device (17) is designed in such a manner that indications of relevant date-dependent and vehicle-weight-dependent driving bans on the determined driving route can be displayed by means of the display device (5), and
wherein at least one alternative driving route, for which the date-dependent and vehicle-weight-dependent driving bans are taken into account, can also be additionally displayed by means of the display device (5), and
wherein the navigation device (17) has an input device (12) which can be actuated by the driver and the actuation of which makes it possible to select one of the displayed driving routes, and
wherein the current date and the vehicle weight are also stored in the information device (19) of the navigation device (17),
wherein provision is made for the current date, the vehicle weight and the information relating to the date-dependent and vehicle-weight-dependent driving bans to be stored in the single information device (19) of the navigation device (17) that forms a structural unit.

2. Commercial vehicle having a navigation device (17) according to Claim 1.

3. Method for assisting a driver of a commercial vehicle, wherein a navigation device (17) in the form of a mobile unit is provided, wherein the navigation device (17) has a control device (9) and a display device (5), wherein a driving route that is optimized with respect to at least one optimization parameter is determined by means of the control device (9), and wherein the determined driving route is displayed to a driver of the vehicle (1) by means of the display device (5), wherein the control device (9) has a data-transmitting connection to an information device (19) of the navigation device (17), in which information relating to date-dependent and vehicle-weight-dependent driving bans on defined route sections is stored, and
wherein provision is made for indications of relevant date-dependent and vehicle-weight-dependent driving bans on the determined driving route to be displayed to the driver by means of the display device (5), and
wherein, if indications of driving bans on the determined driving route are displayed to the driver, at least one alternative driving route, for which the date-dependent and vehicle-weight-dependent driving bans are taken into account, is also displayed to the driver,
wherein an input device (12) of the navigation device (17) is provided, which input device can be actuated by the driver and the actuation of which makes it possible to select one of the displayed driving routes, and
wherein the current date and the vehicle weight and the information relating to the date-dependent and vehicle-weight-dependent driving bans are stored in the information device (19) of the navigation device (17),
wherein provision is made for the current date, the vehicle weight and the information relating to the date-dependent and vehicle-dependent driving bans to be stored in the single information device (19) of the navigation device (17) that forms a structural unit.

## Revendications

1. Dispositif de navigation sous la forme d'un appareil mobile pour un véhicule utilitaire, le dispositif de navigation (17) présentant un dispositif de commande (9) et un dispositif d'affichage (5), et dans lequel le dispositif de commande (9) permet d'établir un itinéraire optimisé par rapport à au moins un paramètre d'optimisation, et dans lequel le dispositif d'affichage (5) permet d'afficher l'itinéraire établi pour un conducteur du véhicule (1), dans lequel le dispositif de commande (9) est relié en transmission de données à un dispositif d'information (19) du dispositif de navigation (17), dans lequel sont mémorisées des informations concernant des interdictions de circuler en fonction de la date et du poids du véhicule sur des tronçons d'itinéraire définis, et
dans lequel le dispositif de navigation (17) est réalisé de telle sorte que le dispositif d'affichage (5) permet d'afficher des indications concernant des interdictions de circuler pertinentes en fonction de la date et du poids du véhicule sur l'itinéraire établi, et
dans lequel le dispositif d'affichage (5) permet de plus d'afficher au moins un itinéraire alternatif sur lequel les interdictions de circuler en fonction de la date et du poids du véhicule sont prises en compte, et
dans lequel le dispositif de navigation (17) permet de sélectionner un dispositif d'entrée (12) pouvant être actionné par le conducteur et dont l'actionnement permet de sélectionner l'un des itinéraires affichés, et
dans lequel la date actuelle et le poids du véhicule sont également mémorisés dans le dispositif d'information (19) du dispositif de navigation (17),
dans lequel il est prévu que la date actuelle, le poids du véhicule et les informations concernant les interdictions de circuler en fonction de la date et du poids du véhicule soient mémorisés dans le dispositif d'information unitaire (19), réalisant une unité modulaire, du dispositif de navigation (17).

2. Véhicule utilitaire, comprenant un dispositif de navigation (17) selon la revendication 1.

3. Procédé d'assistance à un conducteur d'un véhicule utilitaire, dans lequel un dispositif de navigation (17) réalisé sous la forme d'un appareil mobile est prévu, dans lequel le dispositif de navigation (17) présente un dispositif de commande (9) et un dispositif d'affichage (5), dans lequel le dispositif de commande (9) établit un itinéraire optimisé par rapport à au moins un paramètre d'optimisation, et dans lequel le dispositif d'affichage (5) affiche l'itinéraire établi pour un conducteur du véhicule (1), dans lequel le dispositif de commande (9) est relié en transmission de données à un dispositif d'information (19) du dispositif de navigation (17), dans lequel des informations concernant des interdictions de circuler en fonction de la date et du poids du véhicule sur des tronçons d'itinéraire définis sont mémorisées, et
dans lequel il est prévu d'afficher pour le conducteur au moyen du dispositif d'affichage (5) des indications concernant des interdictions de circuler pertinentes en fonction de la date et du poids du véhicule sur l'itinéraire établi, et
dans lequel, dans la mesure où des indications concernant des interdictions de circuler sur l'itinéraire établi sont affichées pour le conducteur, au moins un itinéraire alternatif sur lequel les interdictions de circuler dépendant de la date et du poids du véhicule sont prises en compte est également affiché pour le conducteur,
dans lequel un dispositif d'entrée (12) du dispositif de navigation (17), pouvant être actionné par le conducteur, est prévu dont l'actionnement permet de sélectionner l'un des itinéraires affichés, et
dans lequel la date actuelle et le poids du véhicule et les informations concernant les interdictions de circuler en fonction de la date et du poids du véhicule sont mémorisés dans le dispositif d'information (19) du dispositif de navigation (17),
dans lequel il est prévu que la date actuelle, le poids du véhicule et les informations concernant les interdictions de circuler en fonction de la date et du véhicule soient mémorisées dans le dispositif d'informations unitaire (19), réalisant une unité modulaire, du dispositif de navigation (17).
